Europäisches Patentamt

European Patent Office

Office européen des brevets

(19)

(11) **EP 0 865 150 A2**

(12) **EUROPÄISCHE PATENTANMELDUNG**

(43) Veröffentlichungstag:
16.09.1998 Patentblatt 1998/38

(51) Int. Cl.$^6$: **H02M 5/293**

(21) Anmeldenummer: 98104518.0

(22) Anmeldetag: 12.03.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **12.03.1997 DE 19710161**
**22.09.1997 DE 19741655**

(71) Anmelder: **Ascom FRAKO GmbH**
**79331 Teningen (DE)**

(72) Erfinder:
• **Hofstetter, Peter**
**79336 Herbholzheim-Wagenstadt (DE)**
• **Schneider, Thomas**
**79312 Emmendingen (DE)**

(74) Vertreter:
**Goddar, Heinz J., Dr. et al**
**FORRESTER & BOEHMERT**
**Franz-Joseph-Strasse 38**
**80801 München (DE)**

(54) **Schaltung zur stufenlosen direkten oder indirekten Variation des durch einen von einer Netz-Gleich- oder Wechselspannung oder einer beliebigen Kombination derselben betriebenen Verbraucher fliessenden Gleich- und/oder Wechselstroms**

(57)     Schaltung zur stufenlosen direkten oder indirekten Variation des durch einen von einer Netz-Gleich- oder -Wechselspannung oder einer beliebigen Kombination derselben betriebenen Verbraucher fließenden Gleich- und/oder Wechselstroms, mit dem Netz, das eine Bingangsspannung $U_{ein}$ mit einer beliebigen Form und Frequenz $f_{Netz}$ zur Verfügung stellt, und dem Verbraucher, der über die Schaltung am Netz angeschlossen ist, wobei durch einen Tiefpaßfilter, der zur Erzielung eines kontinuierlich fließenden Eingangsstroms $I_{ein}$ dient, eine Spule, die in Reihe zu dem Verbraucher angeschlossen oder in dem Verbraucher implizit enthalten ist, einen ersten Wechselstromschalter, der zu dem Verbraucher und der Spule parallel angeschlossen ist, einen zweiten, mit einer gegenüber der Netzfrequenz $f_{Netz}$ höheren Schaltfrequenz ansteuerbaren Wechselstromschalter, der zu dem Verbraucher in Reihe angeschlossen ist, und eine Regeleinrichtung zur direkten oder indirekten Regelung des durch den Verbraucher fließenden Gleich- und/oder Wechselstroms $I_{Last}$, die einen Erfassungsteil zur direkten und/oder indirekten Erfassung des durch den Verbraucher fließenden Ist-Gleich- und/oder -Wechselstroms $I_{Last, ist}$, einen Sollwerteingabeteil zur direkten oder indirekten Eingabe des Sollwerts des durch den Verbraucher fließenden Gleich- und/oder Wechselstroms $I_{Last,soll}$ und einen Ansteuerteil umfaßt, der den zweiten Wechselstromschalter mit einer zur Erzeugung des Soll-Gleich- und/oder -Wechselstroms $I_{Last,soll}$ geeigneten Schaltfrequenz und einem geeigneten Tastverhältnis $\tau$ ein- und ausschaltet.

**Fig. 10**

## Beschreibung

Die vorliegende Erfindung betrifft eine Schaltung zur stufenlosen direkten oder indirekten Variation des durch einen von einer Netz-Gleich- oder -Wechselspannung oder einer beliebigen Kombination derselben betriebenen Verbraucher fließenden Gleich- und/oder Wechselstroms, mit dem Netz, das eine Eingangsspannung $U_{ein}$ mit einer beliebigen Form und Frequenz $f_{Netz}$ zur Verfügung stellt, und dem Verbraucher, der über die Schaltung am Netz angeschlossen ist.

Solche Verbraucher oder Lasten können z.B. Heizungen sein, die aus ohmschen Widerstanden oder Heizröhren bestehen und einen mehr oder weniger linearen Verlauf der Temperatur-Widerstandskennlinie aufweisen. Die Schaltung ist auch bei Verbrauchern mit induktiver Charakteristik, wie z.B. Motoren, Transformatoren oder Filterschaltungen, anwendbar. Kapazitive Verbraucher, wie elektrische oder elektronische Schaltungen, oder kapazitive Beschaltungen von anderen Verbrauchertypen sowie Filterschaltungen mit kapazitiver Charakteristik können ebenfalls eingesetzt werden. Die Verbraucher oder Lasten können aus unterschiedlichen steilen dieser Verbraucherarten zusammengesetzt sein.

Zur Regulierung der Leistungsabgabe an elektrische oder elektronische Verbraucher werden verschiedene Verfahren eingesetzt. Ziel dieser Verfahren ist es, die an einen Verbraucher oder eine Last abgegebene Leistung im Bereich zwischen 0 bis 100 % der Nominalleistung in beliebigen Schritten zu variieren.

Ein derartiges Verfahren stellt die Phasenanschnittsteuerung dar, die bei Wechselstromnetzen eingesetzt wird. Bei der Phasenanschnittsteuerung werden beide Netzspannungshalbwellen teilweise ausgeblendet und wird damit die an den Verbraucher effektiv abgegebene Leistung reduziert. Die an den Verbraucher abgegebene Leistung kann mittels der Phasenanschnittsteuerung durch Verändern des Phasenwinkels zwischen 0 und 100% der Nominalleistung variiert werden. Es ist bei diesem Verfahren nachteilig, daß sich Netzspannung und Netzstrom in ihrer Form unterscheiden, d.h., daß der Netzstrom gegenüber der Netzspannung Oberschwingungen aufweist. Diese Oberschwingungen können andere Verbraucher negativ beeinflussen und zu erheblichen Problemen im Netz fuhren. Durch den Einsatz von extrem großen Filtern können diese Oberschwingungen reduziert werden, was jedoch zu Blindströmen und Reduktion der Wirkanteile führt.

Ein weiteres derartiges Verfahren stellt die Voll- oder Halbwellenpaketsteuerung dar, die bei Wechselstromnetzen Anwendung findet. Bei diesem Verfahren werden mehrere Netzvoll- oder -halbwellen ausgeblendet. Das bedeutet, daß der Verbraucher periodisch am Netz zu- und abgeschaltet wird. Durch Verändern der Einschaltdauer wird die im Mittel an den Verbraucher abgegebene Leistung im Bereich zwischen 0 und 100% der Nominalleistung variiert. Dieses verfahren weist den Nachteil auf, daß der Verbraucher das Netz periodisch belastet. Bei nichtlinearen Verbrauchern verstärkt sich dieser Effekt durch den erhöhten Startstrom noch zusätzlich. Die periodische Netzbelastung erzeugt aufgrund der Netzimpedanz Schwankungen der Netzspannung, was sich z.B. an Beleuchtungseinrichtungen in Form von Flicker als störend auswirkt.

Beide oben beschriebenen Verfahren zur Regulierung der aufgenommenen Leistung von Verbrauchern sind nicht mehr - oder nur noch mit zusätzlichem Aufwand - in öffentlichen Netzen anwendbar, wenn die Normen zur Begrenzung von Oberschwingungen (EN61000-3-2 bzw. EN61000-3-4) und zur Begrenzung von Flicker (EN61000-3-3) in Kraft treten. Nach dem derzeitigen Stand der Diskussion in den zuständigen europäischen Gremien werden diese Normen endgültig zum 1. Januar 2001 in Kraft treten.

Der Erfindung liegt somit die Aufgabe zugrunde, eine gattungsgemäße Schaltung bereitzustellen, durch die Oberschwingungen und Flicker im Netz vermieden werden.

Erfindungsgemäß wird diese Aufgabe gelöst durch einen

- Tiefpaßfilter, der zur Erzielung eines kontinuierlich fließenden Eingangsstroms $I_{ein}$ dient,

- eine Spule, die in Reihe zu dem Verbraucher angeschlossen oder in dem Verbraucher implizit enthalten ist,

- einen ersten Wechselstromschalter, der zu dem Verbraucher und der Spule parallel angeschlossen ist,

- einen zweiten, mit einer gegenüber der Netzfrequenz $f_{Netz}$ höheren Schaltfrequenz ansteuerbaren Wechselstromschalter, der zu dem Verbraucher in Reihe angeschlossen ist, und

- eine Regeleinrichtung zur direkten oder indirekten Regelung des durch den Verbraucher fließenden Gleich- und/oder Wechselstroms $I_{Last}$, die einen Erfassungsteil zur direkten und/oder indirekten Erfassung des durch den Verbraucher fließenden Ist-Gleich-und/oder -Wechselstroms $I_{Last, ist}$, einen Sollwerteingabeteil zur direkten oder indirekten Eingabe des Sollwerts des durch den Verbraucher fließenden Gleich- und/oder Wechselstroms $I_{Last,soll}$ und einen Ansteuerteil umfaßt, der den zweiten Wechselstromschalter mit einer zur Erzeugung des soll-Gleich-und/oder -Wechselstroms $I_{Last,soll}$ geeigneten Schaltfrequenz und einem geeigneten Tastverhältnis $\tau$ ein- und ausschaltet. Eine Kombination einer direkten und einer indirekten Erfassung führt zu einer Erfassung der Leistung $P_{Last}$.

Eine besondere Ausführungsform der Erfindung ist gekennzeichnet durch einen ersten und/oder zweiten Wechselstromschalter in Form von zwei ansteuerbaren, jeweils zu dem Verbraucher und der Spule parallel angeschlossenen Halbleiterschalter in Kombination mit jeweils einer in Reihe angeschlossenen Diode, wobei die Halbleiterschalter-Diode-Kombinationen zueinander antiparallel angeschlossen sind.

Weiterhin kann die Schaltung gekennzeichnet sein durch einen ersten und/oder zweiten Wechselstromschalter in Form von zwei in Reihe und zueinander entgegengesetzt angeschlossenen Halbleiterschaltern mit oder ohne jeweils eine(r) darin integrierte(n) oder eine(r) separate(n), zum jeweiligen Halbleiterschalter parallel angeschlossene(n) Inversdiode oder ein(em) dazu parallel angeschlossenen/angeschlossenes Halbleiterbauelement mit integrierter Inversdiode ist.

Durch den Einsatz von Halbleiterschaltern, die in Reihe und zueinander entgegengesetzt angeschlossen sind, werden geringere Durchlaßspannungen und damit geringere Durchlaßverluste sowie ein höherer Wirkungsgrad erzielt. Darüberhinaus ermöglichen Halbleiterschalter mit integrierter Inversdiode einen einzigen Strompfad mit einer geringeren Anzahl von Bauelementen, da die Inversdioden auf einem Halbleiterschalter-Chip integriert sind. Die Verwendung von Halbleiterschaltern stellt eine einfache, intelligente Lösung dar, die eine Vereinfachung der Ansteuerung der Halbleiterschalter, eine Vereinfachung der Hilfsspannungserzeugung zur Ansteuerung der Halbleiterschalter und eine Reduzierung des Bauteileaufwands im Ansteuerkreis ermöglicht. Alternativ ermöglichen darüberhinaus Halbleiterschalter mit einer separaten Inversdiode eine bessere Anpassung der Schaltbauelemente und der Inversdiode hinsichtlich Durchlaßspannung und Schaltgeschwindigkeit an die jeweilige Schaltaufgabe. Schaltbauelemente mit integrierter Inversdiode, z.B. MOSFET, können nämlich bei einigen Anwendungen diesbezüglich nur einen schlechten Kompromiß bieten.

Eine besondere Ausführungsform der Erfindung ist gekennzeichnet durch eine Ansteuer- und Synchronisiereinrichtung zur Ansteuerung und zur zu der Polarität oder dem Nulldurchgang der Eingangsspannung $U_{ein}$ synchronen Umschaltung der in dem ersten Wechselstromschalter zugelassenen Stromrichtung, die zur Erfassung der Polarität der Eingangsspannung netzseitig parallel zur Eingangsspannung $U_{ein}$ angeschlossen ist und den ersten Wechselstromschalter über mindestens einen Ansteuer-Optokoppler, der von mindestens einer jeweiligen Stromquelle angesteuert wird, zur Ansteuerung desselben umfaßt.

Wiederum eine alternative Ausführungsform ist gekennzeichnet durch einen ersten und zweiten Wechselstromschalter (16, 32), die invers zueinander und nicht netzsynchron ansteuerbar sind.

Vorteilhafterweise ist mindestens ein weiterer Tiefpaßfilter vorgesehen. Ein Tiefpaßfilter kann z.B. am Ein- und am Ausgang vorgesehen sein. Unter Verwendung eines Eingangstiefpaßfilters wird erreicht, daß Eingangsstrom, Eingangsspannung sowie Ausgangsstrom und Ausgangsspannung stehts identisch in Form und Frequenz bleiben (keine Oberschwingungen, kein Flicker). Durch die Tastung des Eingangsstroms ist ein Tiefpaßfilter am Netzeingang erforderlich, um einen kontinuierlich fließenden Netzstrom zu erzeugen. Außerdem sorgt dieser Tiefpaßfilter für die Einhaltung des geforderten Funkentstörgrades. Der Aufbau und die Komplexität des Tiefpaßfilters richtet sich nach den Anforderungen der jeweils gültigen EMV-Normen. Entsprechend diesen Anforderungen kann auch eine Tiefpaßfilter am Ausgang notwendig sein.

Dabei kann vorgesehen sein, daß mindestens ein Tiefpaßfilter mindestens einen zu dem Netz parallel angeschlossenen Kondensator oder eine Kombination von mindestens einer stromkompensierten oder nicht stromkompensierten Spule und mindestens einem Kondensator, wobei mindestens ein Kondensator ein X-Kondensator oder mindestens ein Kondensator ein Y-Kondensator und/oder die Kombination mehrstufig ist, umfaßt. Die Kombination hängt von der Leistung, von der Schaltfrequenz und dem geforderten Entstörgrad ab.

Vorteilhafterweise ist vorgesehen, daß mindestens einer der Halbleiterschalter mindestens ein MOSFET-Transistor oder mindestens ein Bipolartransistor oder mindestens ein IGBT oder mindestens ein GTO oder mindestens einen MCT oder mindestens ein Thyristor oder mindestens ein Triac ist.

Weiterhin können die Stromquellen jeweils einen Depletion MOSFET-Transistor oder jeweils einen Enhancement MOSFET-Transistor oder jeweils einen Bipolartransistor oder jeweils einen IGBT umfassen. Die Depletion MOSFET-Transistoren führen bereits bei extrem niedriger Netzspannung, d.h. nur kurz nach dem Spannungsnulldurchgang den für die Ansteuer-Optokoppler notwendigen Strom und ermöglichen Somit eine minimale Totzeit zwischen den Ansteuersignalen für die beiden Gleichstromschalter.

Gemaß einer besonderen Ausführungsform kann vorgesehen sein, daß der/die Ansteuer-Optokoppler ausgangsseitig den ersten Wechselstromschalter direkt oder indirekt über eine Treiber- oder Inverterstufe ansteuert/ansteuern.

Günstigerweise sind Halbleiterbauelemente der beiden Wechselstromschalter derart angeordnet, daß das Bezugspotential zur Ansteuerung jeweils gemeinsam ist. Bei Verwendung von z.B. MOSFET-Transistoren als Wechselstromschalter sind dann die beiden Source-Elektroden miteinander verbunden.

Günstigerweise wird durch einen Shunt oder einen stromwandler der Strom in dem zweiten Wechseletromschalter der Regeleinrichtung zugeführt. Damit wird ein elektronischer Überlast- bzw. Kurzschlußschutz realisiert und eine Stromüberwachung geschaffen, die bei Bedarf in die Regelung der an dem Verbraucher anliegenden Gleich- und/oder Wechselspannung $U_{Last}$ eingreift. Ein Stromwandler weist vor allem bei höheren Leistungen durch geringere Verluste einen Vorteil gegenüber einem Shunt auf.

Vorteilhafterweise liegt die Schaltfrequenz des zweiten Wechselstromschalters im Bereich von 1 kHz bis 500 kHz. Von der Schaltfrequenz das zweiten Wechselstromschalters ist nur die Spule direkt abhängig. Bei zu niedriger Schalterfrequenz wird die Spule mechanisch sehr groß. Bei zu hoher Frequenz (kleine Spule) enstehen große Schalterverluste im zweiten Wechselstromschalter.

Vorteilhafterweise umfaßt der Eingabeteil eine potentialgebundene oder potentialfreie Schnittstelle zur Programmierung des durch den Verbraucher fließenden Gleich- und/oder Wechselstroms $I_{Last}$ und/oder der an dem Verbraucher anliegenden Gleich- und/oder Wechselspannung $U_{Last}$ im Bereich von 0% bis 100% der jeweiligen Nominalwerte. Der Einsatz der erfindungsgemäßen Schaltung als Stellglied in einem übergeordneten Regelkreis erfordert die Möglichkeit, die Ausgangsgröße als Regelgröße einstellbar zu machen wird die erfindungsgemäße Schaltung z.B. zur Versorgung einer Heizung eingesetzt, die temperaturgeregelt betrieben wird, muß der Temperaturregler die Möglichkeit bieten, einen Sollwert an Wandler zu übertragen. Je nach Anforderung kann die zuletzt genannte Ausführungsform mit bekannten Verfahren, wie z.B. Verwendung von Optokopplern, Übertragern oder Trennverstärkern, auch potentialgetrennt sein. Die Art der Datenübertragung, z.B. das Datenprotokoll, kann entsprechend den technischen Standards beliebig sein, wie z.B. eine digitale parallele oder serielle Datenübertragung, PWM, Frequenzmodulation, Analogsignale und alle anderen bekannten Verfahren.

Schließlich kann der Verbraucher ein ohmscher Verbraucher, insbesondere mit einem im wesentlichen linearen verhalten, oder ein induktiver Verbraucher, insbesondere ein Transformator oder Motor oder induktiver Filter, oder ein kapazitiver Verbraucher, insbesondere eine elektrische oder elektronische Schaltung oder eine kapazitive Beschaltung von Verbrauchern oder ein kapazitiver Filter, oder elektrischer oder elektronischer Verbraucher oder eine beliebige Kombination derselben sein.

Der Erfindung liegt die überraschende Erkenntnis zugrunde, daß durch die Verwendung von zwei Wechselstromschaltern und einer geeigneten Ansteuerung derselben der von einem in bestimmten Grenzen linearen Verbraucher von einem sinusförmigen Netz aufgenommene Strom einen sinusförmigen Verlauf aufweist, d.h. im Netz keine Oberschwingungen des Netzstroms vorhanden sind, und der Strom in jedem Arbeitspunkt einen kontinuierlichen Verlauf aufweist, wodurch Schaltvorgänge vermieden werden, die zu Flicker führen könnten.

Gemäß einer besonderen Ausführungsform kann die an den Verbraucher zur Verfügung gestellte Spannung bzw. der durch den Verbraucher fließende Strom über eine frei definierbare Schnittstelle (z.B. digital parallel, digital seriell, PWM, analog etc.) im Bereich zwischen 0% und 100% der Eingangsspannung bzw. des Eingangsstroms programmiert werden. Dabei erreicht z.B. eine 1,2 kW-Schaltung einen Wirkungsgrad zwischen 85% (kleiner Verbraucher mit ungefähr 100 W) und 98% (größter Verbraucher mit ungefähr 1200 W). Es ist auch ein Betrieb des Verbrauchers mit einer Gleichspannungsversorgung oder mit einer kombinierten Gleich- und Wechselspannungsversorgung möglich, wahrend auf der Netzseite die obengenannten Normen eingehalten werden. Ein Wechselspannungsbetrieb des Verbrauchers ist bei bestimmten Verbrauchertypen (z.B. Infrarot-Heizröhren) notwendig, da sich ein Gleichspannungsbetrieb (z.B. durch eine Materialdrift von einer Elektrode zur anderen) in Form einer deutlichen Verkürzung der Lebensdauer des Verbrauchertyps negativ auswirken kann. Die Schaltung verhalt sich vereinfacht dargestellt wie ein verlustloser, programmierbarer Wechselstromwiderstand.

Die Schaltung kann für alle netzbetriebenen Verbraucher eingesetzt werden, deren aufgenommene Leistung in beliebigen Schritten zwischen 0 bis 100% variiert werden soll. Die Schaltung eignet sich dabei besonders für alle Arten von Heizungen mit Ohmscher, teilweise nichtlinearer Charakteristik, wie z.B. Heizlampen und -widerstände für industrielle und sonstige Zwecke, allgemeine Heizöfen, Heizplatten, Dimmer, Wechselstromsteller, Vorschaltgeräte und ähnliches. Die Vorteile zeigen sich besonders dann, wenn diese Verbraucher bisher in einer Art von 2-Punkt-Regelung (Phasenanschnittsteuerung, Halb- oder Vollwellenpaketsteuerung, oder ähnliches) betrieben worden sind, um einen Teillastbetrieb zu erzeugen, und die Verbraucher nun an die neuen Normen angepaßt werden müssen. Die Schaltung ermöglicht den Übergang von einem bisher geschalteten 2-Punkt-Betrieb in einen modernen Permanent-Betrieb mit extrem hohen Wirkungsgrad in jedem Arbeitspunkt. Dabei werden die Anforderungen der Normen EN61000-3-2, EN61000-3-3 und EN61000-3-4 in idealer Weise erfüllt, weil in jedem beliebigen Arbeitspunkt ein kontinuierlicher sinusförmiger Stromfluß gewährleistet wird.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:

Fig. 1 schematisch einen Wechselstromschalter in Form von zwei über ihre Kollektoren verbundenen IGBTs mit integrierter Inversdiode gemäß einer Ausführungsform der erfindungsgemäßen Schaltung,

Fig. 2 schematisch einen Wechselstromschalter in Form von zwei über ihre Emitter verbundenen IGBTs gemäß einer weiteren Ausführungsform der erfindungsgemäßen Schaltung,

Fig. 3 schematisch einen Wechselstromschalter in Form von zwei IGBTs mit separaten, parallel geschalteten Inversdioden gemäß einer weiteren Ausführungsform der erfindungsgemäßen Schaltung,

Fig. 4 schematisch einen Wechselstromschalter in Form von zwei antiparallelen Strompfaden, die jeweils einen MOSFET Transistor und eine Diode gegen Umkehrspannungen enthalten.

Fig. 5 schematisch eine Ausführungsform der erfindungsgemäßen Schaltung, die eine Spannungsregeleinrichtung und einen ersten Wechselstromschalter in Form von zwei antiparallelen Halbleiterschaltern umfaßt,

Fig. 6 Ansteuersignale und Signalverläufe beim Betrieb der in Fig. 5 gezeigten Schaltung,

Fig. 7 eine mögliche Stromquelle-Optokoppler-Kombination der erfindungsgemäßen Schaltung,

Fig. 8 Ansteuersignale zur Netzsynchronisierung der in Fig. 7 gezeigten Schaltung im Bereich des Netznulldurchgangs,

Fig. 9 den Schaltplan eines Teils einer konkretisierten und teilweise abgeänderten Ausführungsform der in Fig. 5 gezeigten Schaltung,

Fig. 10 schematisch eine weitere Ausführungsform der erfindungsgemäßen Schaltung, die eine Stromregeleinrichtung und erste und zweite Wechselstromschalter wie die Schaltung von Fig. 9 aufweist,

Fig. 11 schematisch eine abgewandelte Ausführungsform von Fig. 10, die nur eine Ansteuerleitung zur netzsynchronen Ansteuerung des ersten Wechselstromschalters umfaßt,

Fig. 12 schematisch eine weitere Ausführungsform der erfindungsgemäßen Schaltung, die eine Stromregeleinrichtung und einen ersten und einen zweiten Wechselstromschalter umfaßt, die invers zueinander und nicht netzsynchron angesteuert werden.

Fig. 13 Ansteuersignale und Strom- und Spannungsverläufe beim Betrieb der in Fig. 12 gezeigten Schaltung.

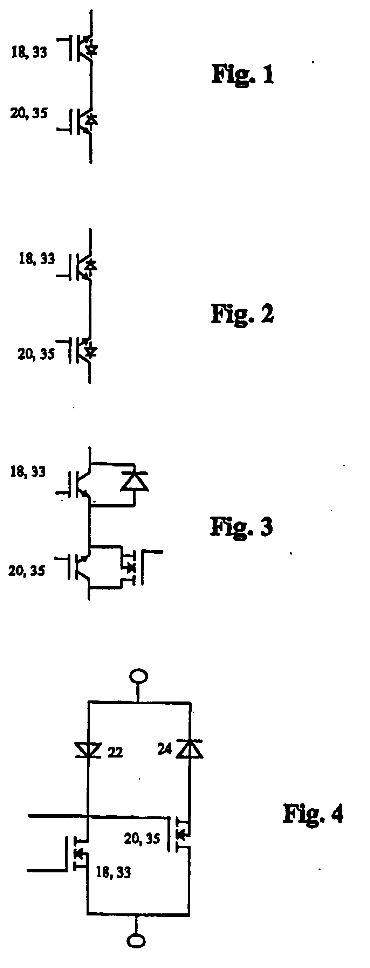

Fig. 1 zeigt eine Ausführungsform der ersten und zweiten Wechselstromschalter 16, 32 der erfindungsgemäßen Schaltung. Die ersten und zweiten Wechselstromschalter 16, 32 bestehen jeweils aus zwei in Reihe geschalteten Halbleiterschaltern 18, 20 bzw. 33, 35 in Form von IGBTs mit jeweils integrierter Inversdiode. Die beiden Halbleiterschalter 18, 20 bzw. 33, 35 sind über ihre Kollektoren verbunden. Durch diese Art der Verschaltung von Halbleiterschaltern wird erreicht, daß je nach Stromrichtung ein Halbleiterschalter in Vorwärtsrichtung leitet, während der andere Halbleiterschalter gleichzeitig über die interne Inversdiode in Rückwärtsrichtung den Strom führt. Die Vorwärtsrichtung entspricht definitionsgemäß bei MOSFET Transistoren der Richtung des von der Drain- zu der Source-Elektrode fließenden Stromes und die Rückwirtsrichtung der umgekehrten Stromflußrichtung. Der vorwärtsleitende Halbleiterschalter übernimmt für diese Stromrichtung auch die Schaltfunktion.

Fig. 2 zeigt eine weitere Ausführungsform der ersten und zweiten Wechselstromschalter aus zwei Halbleiterschaltern 18, 20 bzw. 33, 35 in Form von zwei in Reihe angordneten IGBTs mit jeweils integrierter Inversdiode die über ihre Emitter miteinander verbunden sind.

Fig. 3 zeigt eine weitere Ausführungsform der ersten und zweiten Wechselstromschalter aus zwei Halbleiterschaltern 18, 20 bzw. 33, 35 in Form von zwei in Reihe geschalteten IGBTs ohne integrierte Inversdiode. Die beiden IGBTs sind über ihre Emitter miteinander verbunden. Dem oberen IGBT ist eine separate Diode parallelgeschaltet, die für den IGBT den Rückwärtsstrom führt. Dem unteren IGBT ist ein MOSFET parallel geschaltet. Die in dem MOSFET enthaltene Inversdiode führt für den unteren IGBT den Rückwärtsstrom. Es kann auch eine Parallelschaltung von Bauelementen mit integrierter Inversdiode und Bauelementen ohne Inversdiode sinnvoll sein. Bei einer derartigen Kombination würde das Bauelement mit Inversdiode den Rückwärtsstrom alleine fuhren, wahrend der Vorwärtsstrom von beiden Bauelementen geteilt wird. Durch die Parallelschaltung läßt sich z.B. die zu schaltende Leistung erhöhen.

Fig. 4 zeigt eine weitere Ausführungsform eines ersten und zweiten Wechselstromschalter, die in Form von zwei antiparallelen Strompfaden aufgebaut sind. Jede stromrichtung wird in einem Strompfad geführt. Als Schalter werden MOSFET-Transistoren 18, 20 bzw. 33, 35 verwendet und zum Schutz gegen Umkehrspannungen ist jeweils eine Diode 22 bzw. 24 in Reihe geschaltet. Bei sehr großen Wechselströmen kann diese Kombination den Vorteil bringen, daß jeder Pfad nur für eine Halbwelle Strom führt und sich damit die mittleren Verluste und die Erwärmung dieses Pfades reduzieren.

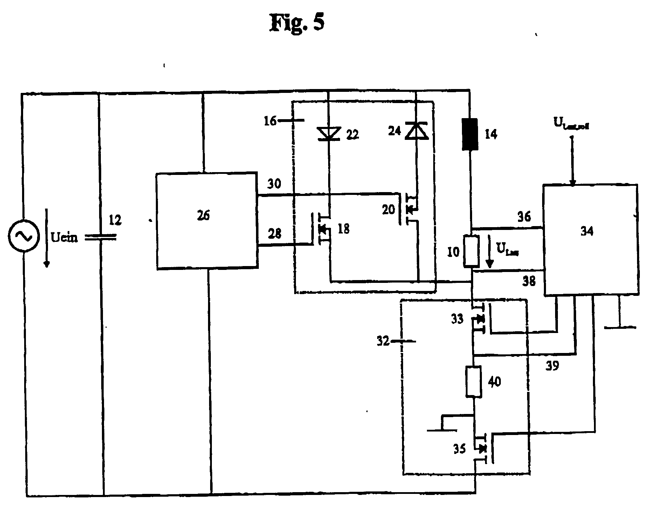

Fig. 5 zeigt einen von einem Netz mit einer Eingangswechselspannung $U_{ein}$ mit einer Netzfrequenz $f_{Netz}$ (50 Hz) betriebenen Verbraucher 10. Weiterhin ist ein Tiefpaßfilter 12 in Form eines Kondensators zu dem Netz parallel und eine Spule 14 zu dem Verbraucher 10 in Reihe angeschlossen. Die an dem Verbraucher 10 anliegende Spannung $U_{Last}$ laßt sich durch die erfindungsgemäße Schaltung stufenlos im Bereich von 0 bis 100% der Eingangswechselspannung $U_{ein}$ variieren. Die Schaltung umfaßt einen ersten Wechselstromschalter 16, einen zweiten, mit einer gegenüber der Netzfreqenz $f_{Netz}$ höheren Schaltfreqenz ansteuerbaren Wechselstromschalter 32, eine Ansteuer- und Synchronisiereinrichtung 26 und eine Regeleinrichtung 34 zur Regelung der an dem Verbraucher 10 anliegenden Wechselspannung $U_{Last}$.

Der erste Wechselstromschalter 16 umfaßt zwei ansteuerbare, jeweils zu dem Verbraucher 10 und der Spule 14 parallel angeschlossene Halbleiterschalter 18 und 20, die als Schutz gegenüber Umkehrspannungen jeweils durch eine in Reihe angeschlossene Diode 22 bzw. 24 ergänzt sind, wobei die Hableiterschalter-Diode-Kombinationen 18 und 22 bzw. 20 und 24 zueinander antiparallel angeordnet sind. Über den zweiten Wechselstromschalter 32 wird die Schaltung in beiden Stromrichtungen an der Wechselspannung des Netzes betrieben. Die Ansteuer- und Synchronisiereinrichtung 26 dient zur Ansteuerung und zur zu der Polarität der Eingangsspannung $U_{ein}$ synchronen Umschaltung der in zueinander entgegengesetzten Schaltzuständen befindlichen Halbleiterschalter 18 und 20, ist zur Erfassung der Polarität der Eingangsspannungs $U_{ein}$ netzseitig parallel zur Eingangsspannung $U_{ein}$ angeschlossen und weist zwei Ansteuerleitungen 28, 30 auf, die jeweils mit einem der Halbleiterschalter 18 und 20 zur Ansteuerung derselben verbunden sind.

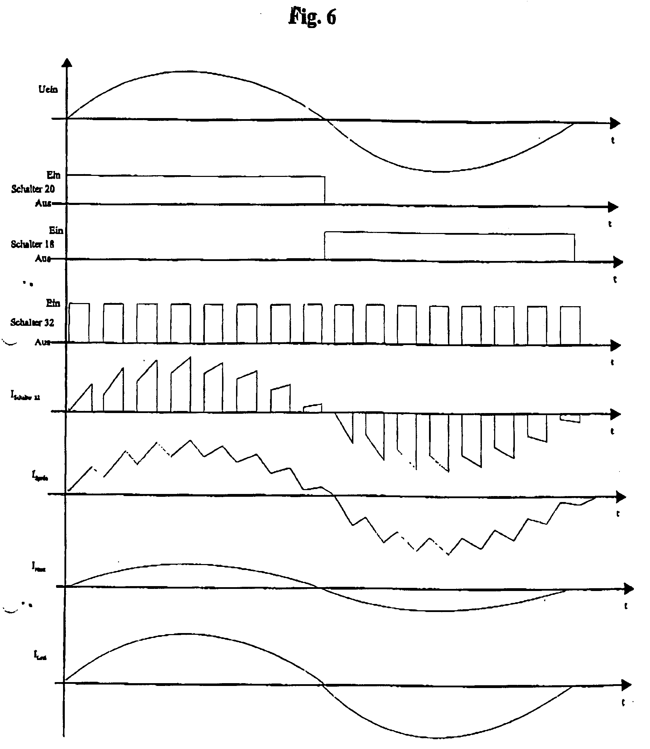

Der zweite Wechselstromschalter 32 ist zu dem Verbraucher 10 in Reihe angeschlossen. Über den zweiten Wechselstromschalter 32 wird die Spule 14 in beiden Stromrichtungen aufmagnetisiert. Je nach Polarität der Eingangswechselspannung $U_{ein}$ wird der entsprechende Halbleiterschalter 18 bzw. 20 aktiviert, damit die Spule 14 bei ausgeschaltetem zweiten Wechselstromschalter 32 über den Verbraucher 10 abmagnetisieren kann. Der Halbleiterschalter 18 wird während der negativen Netzhalbwelle eingeschaltet (siehe auch Fig. 6), der Halbleiterschalter 20 während der positiven Netzhalbwelle (siehe auch Fig. 6). Das bedeutet, daß die Halbleiterschalter 18 und 20 exakt synchron zur Polarität der Eingangewechselspannung $U_{ein}$ umgeschaltet werden.

Die Regeleinrichtung 34 umfaßt einen Spannungserfassungsteil zur Erfassung der an dem Verbraucher 10 anliegenden Ist-Wechselspannung $U_{Last,ist}$ , der über zwei Leitungen 36, 38 parallel zu dem Verbraucher 10 angeschlossen ist, einen Spannungssollwerteingabeteil zur Eingabe des Sollwerts der an den Verbraucher 10 anliegenden Wechselspannung $U_{Last, soll}$ und einen Ansteuerteil, der den zweiten Wechselstromschalter 32 mit einem zur Erzeugung der Soll-Wechselspannung $U_{Last, soll}$ geeigneten Schaltfrequenz und einem geeigneten Tastverhältnis $\tau$ (Einschaltdauer/Periodendauer) ein- und ausschaltet. Dazu wird das Tastverhältnis $\tau$ bei konstanter Schaltfrequenz variiert.

Mittels eines Shunt 40 oder eines geeigneten Stromwandlers wird der Strom durch den zweiten Wechselstromschalter 32 erfaßt und proportional der Regeleinrichtung 34 über die Leitung 39 zugeführt.

In einem stationären Arbeitspunkt, bei dem die Wechselspannung an dem Verbraucher $0 < U_{Last} < U_{ein}$ beträgt, wird der zweite Wechselstromschalter 32 mit einer festen Schaltfrequenz an- und ausgeschaltet. Für einen Anstieg der Spannung $U_{Last}$ wird das Tastverhältnis $\tau$ (Einschaltdauer/Periodendauer) vergrößert, bis bei einer maximalen Spannung von $U_{Last} = U_{ein}$ der zweite Wechselstromschalter 32 permanent eingeschaltet bleibt. Um die Spannung $U_{Last}$ abzusenken, wird das Tastverhältnis $\tau$ bis zu dem wert 0 verkleinert, bei dem die Spannung $U_{Last} = 0$ ist (zweiter Wechselstromschalter 32 ausgeschaltet). Die Schaltfrequenz für den zweiten Wechselstromschalter 32 braucht nicht an die Netzfrequenz $f_{Netz}$ gekoppelt zu werden und liegt im vorliegenden Beispiel im Bereich zwischen 50 - 100 kHz. Der parallel geschaltete Kondensator 12 dient dazu, trotz der Abtastung des Netzstromes mit der Schaltfrequenz des zweiten Wechselstromschalters 32 einen kontinuierlich fließenden Eingangsstrom zu erreichen.

Die Synchronisierung der Ansteuersignale für die Halbleiterschalter 18 und 20 zur Netzfrequenz $f_{Netz}$ ist von entscheidender Bedeutung. Bei Überlappung der Ansteuersignale oder einer Phasenverschiebung zur Netzfrequenz $f_{Netz}$ entstehen Kurzschlußpfade. Bei verzögerter Aktivierung der Freilaufpfade oder Netzausfällen (worst case im Spannungsmaximum) kann die Spule 14 nicht kontrolliert abmagnetisieren und wurden undefinierte Spannungsspitzen entstehen.

Die Regeleinrichtung 34 erfaßt die Spannung $U_{Last}$ an dem Verbraucher, vergleicht den Wert mit dem Sollwert $U_{Last, soll}$ und stellt entsprechend der Differenz ein entsprechendes Tastverhältnis $\tau$ für den zweiten Wechselstromschalter 32 ein. Um eine Stromüberwachung herzustellen, die bei Bedarf in die Regelung eingreift, wird die stromproportionale Spannung am Shunt 40 erfaßt und der Regelung zugeführt. Der Bezugspunkt (Ground) des Stromerfassungsteils liegt an der Source 42 des zweiten Wechselstromschalters 32.

Als Halbleiter 18, 20, 33, 35 dienen MOSFET-Transistoren. Es kann jedoch auch jede andere Art von Transistoren, wie z.B. Bipolartransistoren oder IGBT, etc. verwendet werden.

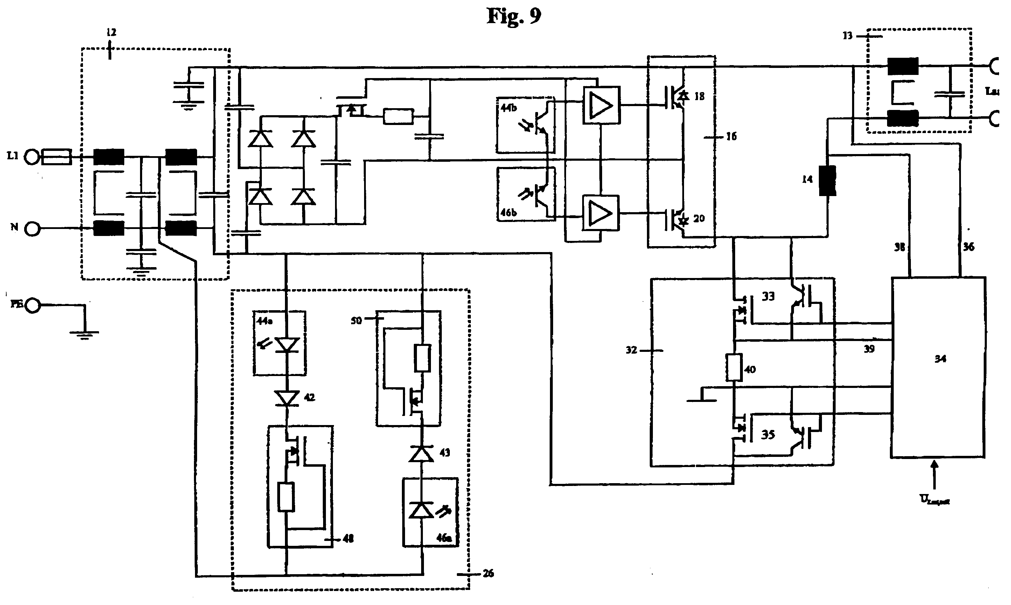

In Fig. 6 sind die Ansteuersignale für die Halbleiterschalter 18, 20 und den zweiten Wechselstromschalter 32 sowie die zugehörigen Ströme in Abhängigkeit von der Zeit t dem zeitlichen Verlauf der Eingangsspannung $U_{ein}$ gegenübergestellt. Die Schaltfrequenz für den zweiten Wechselstromschalter 32 ist bewußt sehr klein gewählt, um die Signalverläufe besser darstellen zu können. Die Ansteuersignale zeigen einen stationären Arbeitspunkt, bei dem $0 < U_{Last} < U_{ein}$ beträgt. Der zweite Wechselstromschalter 32 wird mit einer festen Schaltfrequenz (Schaltzustände EIN, AUS) angesteuert. Über den zweiten Wechselstromschalter 32 fließt entsprechend der Eingangswechselspannung U$_{ein}$ und der Schaltfrequenz ein pulsförmiger Strom I$_{Schalter 32}$, der der Sinusform der Eingangswechselspannung U$_{ein}$ folgt. Der Strom I$_{Spule}$ in der Spule 14 verläuft dagegen bedingt durch die Auf- und Abmagnetisierung, unterlagert von der Sinuskurve der Eingangswechselspannung U$_{ein}$, dreieckförmig. Der Strom durch die Spule 14 bildet sich an dem Verbraucher mit Ohmscher Charakteristik ohne weitere Verformung als Spannung U$_{Last}$ ab. Das bedeutet, daß auch dem Verbraucher 10 eine sinusförmige Spannung zur Verfügung steht. Mit zunehmender Schaltfrequenz des zweiten Wechselstromschalters 32 wird die Restwelligkeit in dem Spulenstrom I$_{Spule}$, die der Sinuskurve überlagert ist, kleiner und die Sinusform wird sehr gut erreicht. Durch zusätzliche Befilterung von Ein- und Ausgangsstrom (s. Tiefpaßfilter 12, 13 in Fig. 9) erreichen beide Ströme und damit auch die Spannungen einen sinusförmigen Verlauf.

Die an dem Verbraucher 10 anliegende Wechselspannung U$_{Last}$ kann über das Tastverhältnis τ des zweiten Wechselstromschalters 32 direkt proportional eingestellt werden. Dabei fließt kontinuierlich Strom. Bei einem Verbraucher mit Ohmscher Charakteristik bildet sich die sinusförmige Eingangswechselspannung U$_{ein}$ ohne Phasenverschiebung oder zusätzliche nichtlineare Verzerrungen mit gleicher Frequenz wieder sinusförmig an dem Verbraucher ab (Power-Factor = 1; cos φ = 1). Das bedeutet, daß die Forderung nach einem kontinuierlichen, sinusförmigen Strom ohne Phasenverschiebung und Verzerrungen von der erfindungsgemäßen Schaltung erfüllt wird. Die erfindungsgemäße Schaltung enthält nur sehr wenige Bauteile im Pfad, der den Verbraucherstrom führt (Spule 14 und zweiter Wechselstromschalter 32 bzw. erster Wechselstromschalter 16) Mit dieser Schaltung wird deshalb auch ein sehr hoher Wirkungsgrad erreicht (bis zu 98%). Die an den Verbraucher 10 abgegebene Energie laßt sich nahezu verlustlos zwischen 0 bis 100% extern variieren.

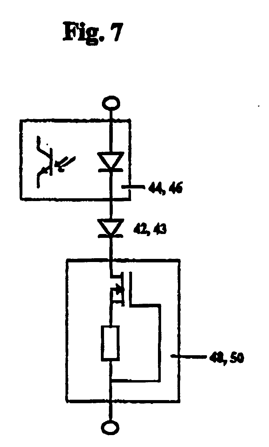

Fig. 7 zeigt eine mögliche Ausführungsform einer Stromquelle-Optokoppler-Kombination der erfindungsgemäßen Schaltung. Ein Ansteuer-Optokoppler 44 bzw. 46 dient zur Ankopplung des Ansteuersignals der Ansteuer- und Synchronisiereinrichtung 26 (s. Fig. 5). Die notwendige Ansteuerspannung wird über eine Stromquelle 48 bzw. 50 erzeugt. Mit den Ansteuer-Optokopplern 44 bzw. 46 lassen sich sehr einfach die vorhandenen Potentialunterschiede überbrücken. Die Stromquellen 48 bzw. 50 führen bereits nur sehr kurz nach dem Netznulldurchgang den für die Ansteuer-Optokoppler 44 bzw. 46 erforderlichen Strom und machen damit eine sehr exakte und schnelle Erkennung des Netzstromnulldurchgangs möglich. Ausgangsseitig steuern die Ansteuer-Optokoppler 44 bzw. 46 den ersten Wechselstromschalter, entweder direkt oder indirekt, über geeignete Treiber- oder Übertragungsstufen an. Die Stromquelle-Optokoppler-Kombination(en) ist/sind direkt an der Eingangsspannung angeschlossen. Wenn Depletion MOSFET-Transistoren verwendet werden, sind die Vorteile besonders groß. Depletion Transistoren besitzen einen passiv leitenden Kanal, wodurch bereits bei äußerst minimaler Spannung der für die Ansteuer-Optokoppler 44, 46 notwendige Strom fließen kann. Damit wird der Netzstromnulldurchgang bzw. die Netzspannungspolarität sehr exakt erfaßt. Der Bauteileaufwand für die Erzeugung der Umschaltsignale reduziert sich bei Verwendung von Depletion Transistoren auf den Transistor mit einem Widerstand in Kombination als Stromquelle, eine Schutzdiode gegen Inversspannungen und den Ansteuer-Optokoppler zur Übertragung der Signale. Damit ist diese Lösung sehr genau, äußerst billig durch den geringen Aufwand an Bauteilen und Leiterplattenflache, störunempfindlich durch den kompakten Aufbau, braucht keine zusätzliche Logik zur Auswertung, benötigt keinerlei Hilfsspannung und verbraucht nur extrem wenig Energie. Durch die sehr genaue Erkennung der Netzpolarität, wobei die Schaltung bis ca. 2 Volt Netzspannung arbeitet, ergibt sich ein weiterer besonderer Vorteil. Bei Ausfall der Netzspannung im Spannungsmaximum würden exzessive, undefinierte Induktionsspannungen an der Spule entstehen, wenn die Freilaufzweige zu früh abschalten und den Freilaufpfad sperren. Dadurch würden die Halbleiterschalter extrem gefährdet. Weil aber die Stromquelle-Optokoppler-Kombinationen bis zu einer Spannung von nur noch ca. 2 Volt sicher arbeiten, bleiben die Freilaufzweige auf jeden Fall sicher leitend und gewährleisten ein sicheres Abmagnetisieren der Spule auch bei plötzlichen Spannungsausfällen. Eine Schutzbeschaltung der Spule durch Varistoren, Kondensatoren oder ähnliches ist damit nicht notwendig. Die ganze Schaltung zur Erzeugung der Umschaltsignale reduziert sich auf einen 2-Pol, der denkbar einfach zu handhaben ist. Alternativ kann aber auch vorgesehen sein, die Synchronisiersignale durch Übertrager oder integrierte Schaltkreise, die entsprechende Potentialdifferenzen zulassen, zu übertragen. Fur die Erzeugung und Übertragung dieser Synchronsignale sind auch andere Methoden denkbar.

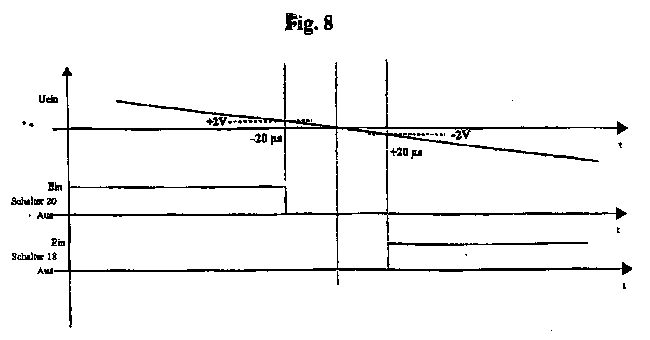

Es steht somit für mindestens eine Netzhalbwelle eine Stromquelle 48,50 zur Verfügung, die den jeweiligen Ansteuer-Optokoppler 44,46 des entsprechenden Freilaufpfads ansteuert. Diese Stromquellen-Optokoppler-Kombinationen sind direkt an der Netzspannung angeordnet. Um den Nulldurchgang der Netzspannung möglichst genau als Umschaltpunkt für die Freilaufpfade zu finden und nur eine minimale Totzeit zwischen beiden Steuersignalen für die Gleichstromschalter 18, 20 zu erreichen, werden Stromquellen 48,50 eingesetzt, die bereits bei extrem geringer Netzspannung, d.h. nur kurz nach dem Spannungsnulldurchgang` den für die Ansteuer-Optokoppler 44,46 notwendigen Strom führen. Mit den Stromquellen 48 (negative Netzhalbwelle) und 50 (positive Netzhalbwelle), die jeweils einen Depletion MOSFET-Transistor umfassen, können hervorragende Werte erreicht werden. Da der Depletion Transistor einen passiv leitenden Kanal besitzt, genügt die Schwellspannung der Ansteuer-Optokopplerdiode und der Schutzdiode 42 bzw. 43, um die Steuerung zu aktivieren. Die Totzeit im Spannungsnulldurchgang beträgt mit dieser Anordnung bei einem 230 Volt rms/50 Hz-Netz nur ca. ±20 µs (siehe Fig. 7 und 8). Das bedeutet, daß bei einer Momentanspannung von nur 2 Volt die beiden Freilaufpfade umgeschaltet werden. Mit derart kleinen Spannungswerten bleibt die Energie in der Spule 14 so gering, daß für die Schaltung keine Gefahr besteht. Mit dieser Konfiguration der Ansteueranordnung wird die Schlüsselfunktion der Schaltung ideal gelöst.

Fig. 9 zeigt ein weiter konkretisiertes und teilweise abgeändertes Beispiel für die in Fig. 5 gezeigte Schaltung. Die Konkretisierung bezieht sich im wesentlichen auf die Ansteuer- und Synchronisiereinrichtung (Netzsynchronisierung). Der in Fig. 9 gezeigte zweite Wechselstromschalter 32 umfaßt zwei Halbleiterschalter 33, 35 in Form von zwei gegensinnig in Reihe geschalteten MOSFET-Transistoren. Um höhere Leistungen zu erreichen, können optional weitere Transistoren (im Beispiel IGBTs) parallel geschaltet werden. Die Transistoren sind am Gate über Vorwiderstände direkt parallel geschaltet und werden alle mit dem gleichen Ansteuersignal betrieben.

Entsprechend der Polarität der Eingangsspannung wird die zulässige Stromrichtung im ersten Wechselstromschalter 16 umgeschaltet. Während der positiven Netzhalbwelle wird der Halbleiterschalter 20 eingeschaltet und leitet der Halbleiterschalter 18 über die integrierte Inversdiode den Freilaufstrom. Während der negativen Netzhalbwelle bleibt der Halbleiterschalter 18 eingeschaltet (Halbleiterschalter 20 ausgeschaltet) und leitet der Halbleiterschalter 20 über die Inversdiode den Freilaufstrom. Die Ansteuersignale kommen über die Stromquellen-Optokoppler-Kombination 26 und werden durch die Optokoppler 44, 46 und die nachfolgenden Treiber (Transistoren oder integrierte Treiber oder ähnliches) an die Halbleiterschalter 18, 20 übertragen. Die notwendige Hilfsspannung wird von einem über Kondensatoren am Netz angeschlossenen Gleichrichter mit einer nachgeschalteten Stromquelle erzeugt.

Zur Regelung der an dem Verbraucher anliegenden Spannung $U_{Last}$ wird mit einem Differenzverstärker die Ist-Spannung $U_{Last, ist}$ an dem Verbraucher proportional erfaßt und geeignet aufbereitet.

Ein nachfolgender Regler vergleicht den Ist-Spannungswert $U_{Last, ist}$ mit einem geforderten Sollwert $U_{Last, soll}$ und gibt die Abweichung an einen Schaltregler weiter. Zur Strombegrenzung wird die Spannung am Shunt-Widerstand 40 erfaßt, aufbereitet und proportional an den Schaltregler weitergegeben. Bei Überschreiten eines bestimmten Schwellwerts reduziert der Schaltregler das Tastverhältnis` Im vorliegenden Ausführungsbeispiel ist sowohl am Eingang als auch am Ausgang ein Tiefpaßfilter 12, 13 vorgesehen. Die Tiefpaßfilter 12, 13 an den Ein- und Ausgängen sind in diesem Beispiel aufwendiger als in den anderen Figuren ausgeführt, in denen nur ein Kondensator dargestellt ist. Es sind Jedoch auch andere Varianten der Ausführungsformen der Tiefpaßfilter 12, 13 denkbar.

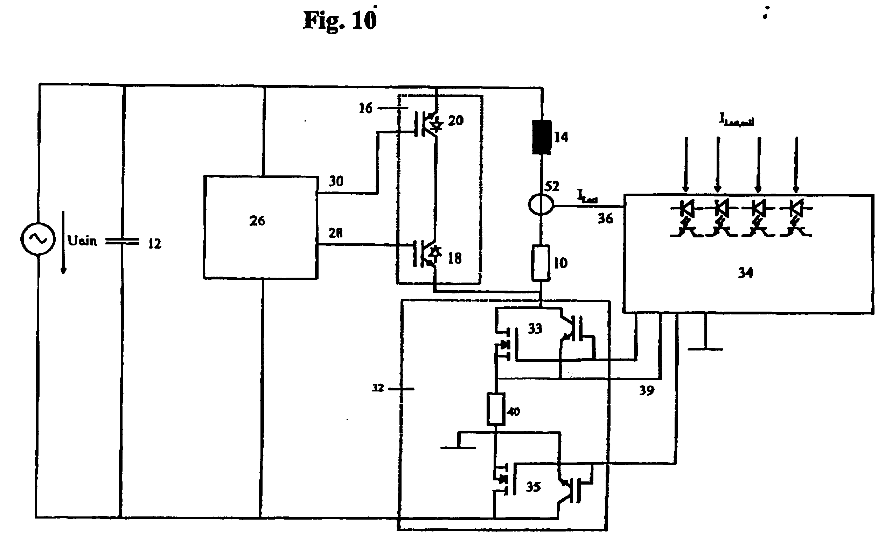

Fig. 10 zeigt schematisch eine weitere Ausführungsform der erfindungsgemäßen Schaltung, die eine Regeleinrichtung 34 für den Strom und einen ersten Wechselstromschalter 16 mit zwei Halbleiterschaltern 18, 20 in Form von zwei in Reihe geschalteten IGBTs mit gemeinsam verbundener Kollektor-Elektrode umfaßt. Der Sollwert für den Ausgangsstrom wird in diesem Beispiel potentialgetrennt über Optokoppler übertragen. Eine Stromregelung kann insbesondere bei stark nichtlinearen Verbrauchertypen gegenüber einer Spannungsregelung deutliche Vorteile bieten, da für die Einhaltung der Normen EN61000-3-2, EN61000-3-3 und EN61000-3-4 die Ströme von entscheidender Bedeutung sind. Im folgenden soll im wesentlichen nur auf die Unterschiede zu den in Fig. 5 und 9 gezeigten Ausführungsformen eingegangen werden. Bei dieser Ausführungsform wird nicht der Sollwert der an einem Verbraucher 10 anliegenden Spannung $U_{Last, soll}$ sondern der Sollwert für den durch den Verbraucher 10 fließenden Strom $I_{Last, soll}$ über einen Eingabeteil der Regeleinrichtung 34 vorgegeben. Der Ist-Gleich- und/oder -Wechselstromwert des durch den Verbraucher 10 fließenden Stroms $I_{Last, ist}$ wird über die Leitung 36 und einen geeigneten Stromwandler 52 erfaßt. Ein Ansteuerteil der Regeleinrichtung 34 steuert dann den zweiten Wechselstromschalter 32 mit einem zur Erzeugung des Sollstroms geeigneten Tastverhältnis $\tau$ bei einer konstanten Schaltfrequenz an. Die Stromerfassung mit einem Shunt 40 kann weiterhin als Spitzenstrombegrenzung und Kurzschlußschutz verwendet werden.

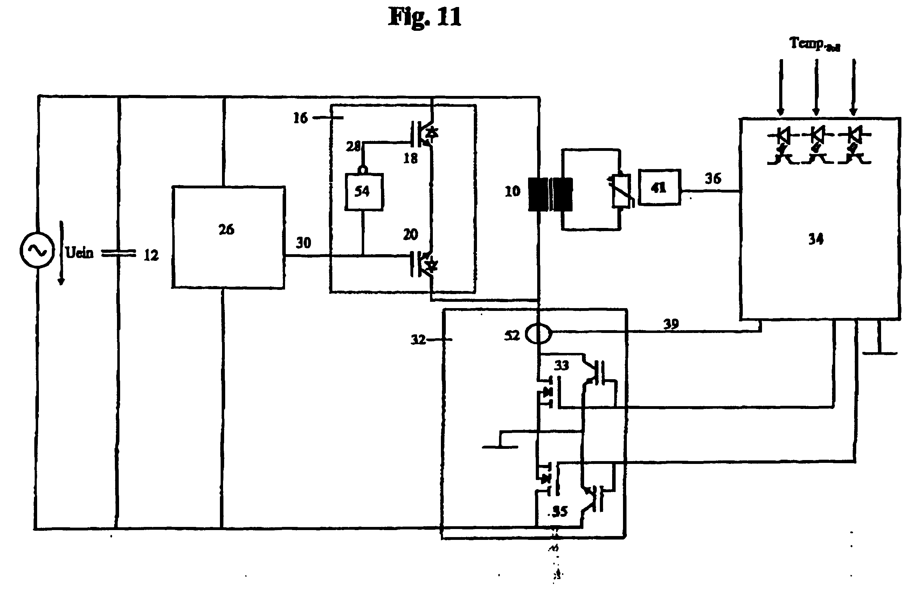

Fig. 11 zeigt eine Variante zu Fig. 10, in der die Halbleiterschalter 18 und 20 des ersten Wechselstromschalters 16 über ein einziges Ansteuersignal 30 der Ansteuer- und Synchronisiereinrichtung 26, das über eine Stromquelle-Optokoppler-Kombination über eine Ansteuerleitung 30 direkt den Halbleiterschalter 20 und über eine Invertiereinrichtung 54 und eine Ansteuerleitung 28 den Halbleiterschalter 18 invers zu dem Halbleiterschalter 20 ansteuert. Durch diese Art der Ansteuerung wird eine zweite Stromquelle-Optokoppler-Kombination gespart sowie keine zweite Ansteuersignalerzeugung notwendig. Im einzelnen sieht die Schaltung wie folgt aus: Der erste Wechselstromschalter 16 weist zwei Halbleiterschalter 18, 20 in Form von zwei IGBTs mit Inversdiode auf, die über die Emitter miteinander verbunden sind, so daß ein gemeinsamer Steuerground vorliegt. Die Ansteuer- und Synchronisiereinrichtung 26 weist nur eine Stromquelle-Optokoppler-Kombination und nur eine Steuerleitung 30 zum ersten Wechselstromschalter 16 auf. Die andere Steuerleitung 28 wird mittels eines Inverters 54 (Transistor, Operationsverstärker oder integrierter Inverter) erzeugt.

Der zweite Wechselstromschalter 32 besteht aus zwei MOSFET in Reihe mit gemeinsamen Source-Potential, denen je ein IGBT parallelgeschaltet ist, was zu einer Leistungserhöhung führt. Der Strom zu dem zweiten Wechselstromschalter 32 wird mit einem Stromwandler 52 erfaßt und über die Leitung 39 der Regeleinrichtung 34 zugeführt. Dadurch wird eine Strombegrenzung und ein Kurzschlußschutz erzielt. Der Verbraucher 10 ist ein Transformator (, wodurch keine separate Induktivität notwendig ist,), der einen nichtlinearen Heizwiderstand versorgt. Die Temperatur dieser Heizung wird über einen Temperatursensor 41 und Leitung 36 der Regeleinrichtung 34 zugeführt. Als Sollwert erhält die Regeleinrichtung 34 über eine Potentialtrennung den Temperatursollwert und stellt entsprechend der Abweichung zwischen Ist-Wert und Soll-Wert das Tastverhältnis an dem zweiten Wechselstromschalter 32 ein. Das heißt, daß der Laststrom indirekt über die Temperatur eingestellt wird. Bei anderen Verbrauchertypen würden andere Größen erfaßt bzw. der Regeleinrichtung als Sollwert vorgegeben. Zum Beispiel bei einem Motor würde die Drehzahl oder das Drehmoment erfaßt bzw. als Sollwert vorgegeben. Entsprechend dem Verbraucher werden die erforderlichen Größen der Regeleinrichtung 34 zugeführt bzw. als Sollwert vorgegeben.

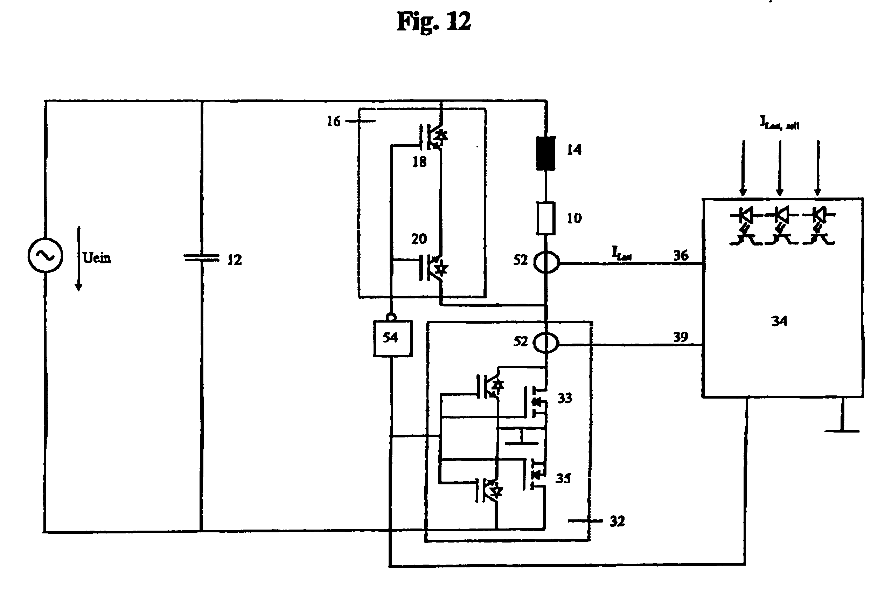

Fig. 12 zeigt schematisch eine weitere Ausführungsform der erfindungsgemäßen Schaltung, die eine Stromregeleinrichtung und einen ersten und zweiten Wechselstromschalter umfaßt, die invers zueinander und nicht netzsynchron angesteuert werden. Der erste Wechselstromschalter 16 ist wie der erste Wechselstromschalter 16 in Fig. 11 gestaltet. Der zweite Wechselstromschalter 32 weist wiederum zwei Halbleiterschalter 33 und 35 und einen Stromwandler als Überlastschutz auf. Über eine Invertiereinrichtung 54 werden die ersten und zweiten Wechselstromschalter 16 und 32 invers zueinander und nicht netzsynchron angesteuert.

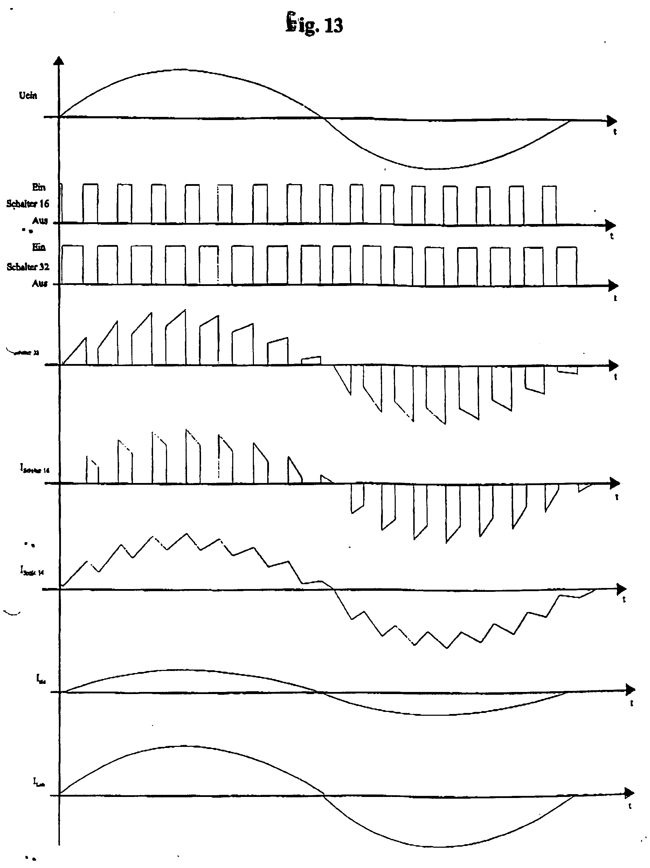

Fig. 13 zeigt die Ansteuersignale und Strom- und Spannungsverläufe bei einer besonderen Betriebsform der in Fig. 12 gezeigten Schaltung. Es erübrigt sich eine Netzsynchronisierung. Während der zweite Wechselstromschalter 32 eingeschaltet ist (Aufmagnetisierung der Spule 14), bleibt der erste Wechselstromschalter 16 ausgeschaltet, um keinen Kurzschlußpfad zu bilden. Wenn der zweite Wechselstromschalter 32 ausgeschaltet wird, muß der erste Wechselstromschalter 16 eingeschaltet werden, um für beide Stromrichtungen die Abmagnetisierung der Spule 14 zu gewährleisten. Die beiden ersten und zweiten Wechselstromschalter 16 und 32 werden somit invers zueinander ein- bzw. ausgeschaltet.

Die erfindungsgemäße Schaltung erfüllt die Anforderungen der oben erläuterten Normen EN61000-3-2, EN61000-3-3 und EN61000-3-4 und weist minimale Verluste, einen maximalen Wirkungsgrad, keinen Blindstrom, keine Phasendrift, keine Nichtlinearität, kontinuierlichen Stromfluß ohne periodische oder aperiodische Unterbrechungen in allen Lastpunkten und einen Regelbereich von 0 bis 100% der Eingangsspannung $U_{ein}$ auf. Wird zwischen zwei Arbeitspunkten, z.B. durch eine Sprungfunktion, gewechselt, so ist eine Anpassung der Spannungssollwertvorgabe an den verwendeten Verbrauchertyp (z.B. trapezförmige Sollwertvorgabe) sinnvoll. Bei einer digitalen Sollwertvorgabe durch einen Mikroprozessor können derartige verbrauchertypische Daten einmal ermittelt und je nach Konfiguration der Endanwendung z.B. in ROM-Speichern abgelegt werden. Es gilt also herauszufinden, mit welcher maximalen Schaltdynamik (Änderungsgeschwindigkeit von Sollwerten) der Verbraucher betrieben werden kann, damit die Konformität zur Norm EN61000-3-3 nicht verletzt wird. Die Einschränkung zur Einhaltung dieser Norm wird nicht mehr von der Schaltung (vorgeschalteter Wandler) bestimmt, sondern liegt nun einzig und allein beim eingesetzten Verbrauchertyp, den es zu charakterisieren gilt. Liegen diese Daten fest, die die theoretisch maximale Sollwertdynamik beschreiben, kann der Verbraucher auch tatsächlich mit dieser Grenzdynamik ideal betrieben werden.

Die Form, Amplitude und Frequenz der Netzspannung können beliebig sein. Vorzugsweise wird die erfindungsgemäße Schaltung an den international üblichen Gleich- und/oder Wechselspannungsnetzen betrieben, und zwar mit z.B. $f_{Netz} \geq O$ Hz und sinusförmigem Strom- und Spannungsverlauf.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Bezugszeichenliste**

| | |
|---|---|
| 10 | Verbraucher |
| 12 | Tiefpaßfilter Eingang |
| 13 | Tiefpaßfilter Ausgang |
| 14 | Spule |
| 16 | erster Wechselstromschalter |
| 18, 20 | Halbleiterschalter |
| 22, 24 | Diode |
| 26 | Ansteuer- und Synchronisiereinrichtung |
| 28, 30 | Ansteuerleitung |
| 32 | zweiter Wechselstromschalter |
| 33 | Halbleiterschalter |
| 34 | Regeleinrichtung |
| 35 | Halbleiterschalter |
| 36, 38, 39 | Leitung |
| 40 | Shunt |
| 41 | Temperatursensor |
| 42, 43 | Diode |
| 44, 46 | Ansteuer-Optokoppler |
| 44a, 44b | Ansteuer-Optokoppler |
| 46a, 46b | Ansteuer-Optokoppler |
| 48, 50 | Stromquelle |

52          Stromwandler

54          Invertiereinrichtung

**Patentansprüche**

1.  Schaltung zur stufenlosen direkten oder indirekten Variation des durch einen von einer Netz-Gleich- oder -Wechselspannung oder einer beliebigen Kombination derselben betriebenen Verbraucher fließenden Gleich- und/oder Wechselstroms, mit

    - dem Netz, das eine Eingangsspannung $U_{ein}$ mit einer beliebigen Form und Frequenz $f_{Netz}$ zur Verfügung stellt, und

    - dem Verbraucher (10), der über die Schaltung am Netz angeschlossen ist, gekennzeichnet durch

    - einen Tiefpaßfilter (12), der zur Erzielung eines kontinuierlich fließenden Eingangsstroms $I_{ein}$ dient,

    - eine Spule (14), die in Reihe zu dem Verbraucher (10) angeschlossen oder in dem Verbraucher (10) implizit enthalten ist,

    - einen ersten Wechselstromschalter (16), der zu dem Verbraucher (10) und der Spule (14) parallel angeschlossen ist,

    - einen zweiten, mit einer gegenüber der Netzfrequenz $f_{Netz}$ höheren Schaltfrequenz ansteuerbaren Wechselstromschalter (32), der zu dem Verbraucher (10) in Reihe angeschlossen ist, und

    - eine Regeleinrichtung (34) zur direkten oder indirekten Regelung des durch den Verbraucher (10) fließenden Gleich- und/oder Wechselstroms $I_{Last}$, die einen Erfassungsteil zur direkten und/oder indirekten Erfassung des durch den Verbraucher (10) fließenden Ist-Gleich- und/oder -Wechselstroms $I_{Last, ist}$, einen Sollwerteingabeteil zur direkten oder indirekten Eingabe des Sollwerts des durch den Verbraucher (10) fließenden Gleich- und/oder Wechselstroms $I_{Last,soll}$ und einen Ansteuerteil umfaßt, der den zweiten Wechselstromschalter (32) mit einer zur Erzeugung des Soll-Gleich- und/oder - Wechselstroms $I_{Last,soll}$ geeigneten Schaltfrequenz und einem geeigneten Tastverhältnis $\tau$ ein- und ausschaltet.

2.  Schaltung nach Anspruch 1, gekennzeichnet durch einen ersten und/oder zweiten Wechselstromschalter (16 und/oder 32) in Form von zwei ansteuerbaren, jeweils zu dem Verbraucher (10) und der Spule (14) parallel angeschlossenen Halbleiterschalter (18, 20; 33, 35) in Kombination mit jeweils einer in Reihe angeschlossenen Diode (22 bzw. 24), wobei die Halbleiterschalter-Diode-Kombinationen zueinander antiparallel angeschlossen sind.

3.  Schaltung nach Anspruch 1, gekennzeichnet durch einen ersten und/oder zweiten Wechselstromschalter (16 und/oder 32) in Form von Zwei in Reihe und zueinander entgegengesetzt angeschlossenen Halbleiterschaltern (18, 20; 33, 35) mit oder ohne jeweils eine(r) darin integrierte(n) oder eine(r) separate(n), zum jeweiligen Halbleiterschalter (18, 20, 21, 33, 35) parallel angeschlossene(n) Inversdiode oder ein(em) dazu parallel angeschlossenen/angeschlossenes Halbleiterbauelement mit integrierter Inversdiode ist.

4.  Schaltung nach einem der vorangehenden Ansprüche, gekennzeichnet durch eine Ansteuer- und Synchronisiereinrichtung (26) zur Ansteuerung und zur zu der Polarität oder dem Nulldurchgang der Eingangsspannung $U_{ein}$ synchronen Umschaltung der in dem ersten Wechselstromschalter (16) zugelassenen Stromrichtung, die zur Erfassung der Polarität der Eingangsspannung netzseitig parallel zur Eingangsspannung $U_{ein}$ angeschlossen ist und den ersten Wechselstromschalter (16) über mindestens einen Ansteuer-Optokoppler (44 oder 46), der von mindestens einer jeweiligen Stromquelle (48 oder 50) angesteuert wird, zur Ansteuerung desselben umfaßt.

5.  Schaltung nach einem der Ansprüche 1 bis 3, gekennzeichnet durch einen ersten und zweiten Wechselstromschalter (16, 32), die invers zueinander und nicht netzsynchron ansteuerbar sind.

6.  Schaltung nach einem der vorangehenden Ansprüche, gekennzeichnet durch mindestens einen weiteren Tiefpaßfilter (13).

7.  Schaltung nach einem der vorangehenden Ansprüche, dadurch gekennzeichnet, daß mindestens ein Tiefpaßfilter (12 und/oder 13) mindestens einen zu dem Netz parallel angeschlossenen Kondensator oder eine Kombination von mindestens einer stromkompensierten oder nicht stromkompensierten Spule und mindestens einem Kondensator, wobei mindestens ein Kondensator ein X-Kondensator oder mindestens ein Kondensator ein Y-Kondensator und/oder die Kombination mehrstufig ist, umfaßt.

8.  Schaltung nach einem der Ansprüche 2 bis 7, dadurch gekennzeichnet, daß mindestens einer der Halbleiterschalter (18, 20, 33, 35) mindestens ein MOSFET-Transistor oder mindestens ein Bipolartransistor oder mindestens ein IGBT oder mindestens ein GTO oder mindestens einen MCT oder mindestens ein Thyristor oder mindestens ein Triac ist.

9. Schaltung nach einem der Ansprüche 2 bis 8, dadurch gekennzeichnet, daß die Stromquellen (48, 50) jeweils einen Depletion MOSFET-Transistor oder jeweils einen Enhancement MOSFET-Transistor oder jeweils einen Bipolartransistor oder jeweils einen IGBT umfassen.

10. Schaltung nach einem der Ansprüche 2 bis 9, dadurch gekennzeichnet, daß der/die Ansteuer-Optokoppler (44,46) ausgangsseitig den ersten Wechselstromschalter (16) direkt oder indirekt über eine Treiber- oder Inverterstufe ansteuert/ansteuern.

11. Schaltung nach einem der vorangehenden Ansprüche, dadurch gekennzeichnet, daß die Halbleiterbauelemente der beiden Wechselstromschalter (16, 32) derart angeordnet sind, daß das Bezugspotential zur Ansteuerung jeweils gemeinsam ist.

12. Schaltung nach einem der vorangehenden Ansprüche, dadurch gekennzeichnet, daß durch einen Shunt (40) oder einen Stromwandler der Strom in dem zweiten Wechselstromschalter (32) der Regeleinrichtung (34) zugeführt wird.

13. Schaltung nach einem der vorangehenden Ansprüche, dadurch gekennzeichnet, daß die Schaltfrequenz des zweiten Wechselstromschalters (32) im Bereich von 1 kHz bis 500 kHz liegt.

14. Schaltung nach einem der vorangehenden Ansprüche, dadurch gekennzeichnet, daß der Eingabeteil eine potentialgebundene oder potentialfreie Schnittstelle zur Programmierung des durch den Verbraucher (10) fließenden Gleich- und/oder Wechselstroms $I_{Last}$ und/oder der an dem Verbraucher (10) anliegenden Gleich- und/oder Wechselspannung $U_{Last}$ im Bereich von 0% bis 100% der jeweiligen Nominalwerte umfaßt.

15. Schaltung nach einem der vorangehenden Ansprüche, dadurch gekennzeichnet, daß der Verbraucher (10) ein ohmscher Verbraucher, insbesondere mit einem im wesentlichen linearen Verhalten, oder ein induktiver Verbraucher, insbesondere ein Transformator oder Motor oder induktiver Filter, oder ein kapazitiver Verbraucher, insbesondere eine elektrische oder elektronische Schaltung oder eine kapazitive Beschaltung von Verbrauchern oder ein kapazitiver Filter, oder elektrischer oder elektronischer Verbraucher oder eine beliebige Kombination derselben ist.

Fig. 1

Fig. 2

Fig. 3

Fig. 4

# Fig. 5

## Fig. 6

## Fig. 7

44, 46

42, 43

48, 50

Fig. 8

Fig. 9

EP 0 865 150 A2

Fig. 10

# Fig. 11

EP 0 865 150 A2

**Fig. 12**

EP 0 865 150 A2

# Fig. 13